# EUROPEAN PATENT SPECIFICATION

(11) **EP 1 006 305 B1**
(45) Date of publication and mention of the grant of the patent: **20.08.2003**
(21) Application number: 99204031.1
(22) Date of filing: 29.11.1999
(51) Int. Cl.: F16L 17/025, F16L 37/084

(54) **Sealing ring and pipe-connecting element having a sealing ring**
Dichtungsring und Rohrverbindungselement mit einem Dichtungsring
Joint d'étanchéité et élément de raccordement de tubes comportant un joint d'étanchéité

(30) Priority: 04.12.1998 NL 1010726
(43) Date of publication of application: 07.06.2000
(73) Proprietor: WAVIN B.V., 8011 CW Zwolle (NL)
(72) Inventor: Boer, Hans, 7772 AK Hardenberg (NL); Hamberg, Maarten Jan Jacob, 8017 GN Zwolle (NL); de Greef, Peter Evert Jacobus, 7701 CN Dedemsvaart (NL); Brown, Mike, Swindon, Wiltshire SN5 9NJ (GB)
(74) Representative: Riemens, Roelof Harm

(56) References cited:
- EP-A- 0 503 258
- WO-A-94/25786
- GB-A- 1 148 885
- GB-A- 2 071 798

## Description

The invention relates to a sealing ring with a profiled, polygonal cross section. The invention also relates to a pipe-connecting element for connecting a pipe end to a socket, and to a pipe connecting element and the associated pipe end.

A very large number of forms of sealing rings are known. For example, DE-U-6,601,116 discloses a rubber sealing ring which is X-shaped in cross section. The X-shaped sealing ring is intended for use in a pipe-connecting element for connecting two smooth pipe ends to one another. The pipe-connecting element in this case comprises two X-shaped sealing rings, a spacer ring arranged between them, a push-on sleeve and a threaded ring which can be screwed to the latter. The push-on sleeve and the threaded ring, together with the spacer ring, leave clear circumferential grooves which are substantially square in cross section. The sealing rings are accommodated in the circumferential grooves, the limbs of the X-shaped sealing rings each engaging in the corners of the substantially square cross sections of the circumferential grooves. The push-on sleeve and the threaded ring can be screwed further together, thus reducing the size of the circumferential grooves. This has the result of deforming the X-shaped sealing rings. If two pipe ends are arranged in the pipe-connecting element, screwing them together ensures that the sealing rings come to bear against the outer surfaces of the pipe ends in a sealing manner.

A drawback of these known X-shaped sealing rings is that, after the pipe-connecting element has been arranged on two pipe ends, they have to be compressed in order to provide a seal against the pipe ends. The sealing contact between the limbs of the X-shaped sealing rings and the pipe ends is in this case very much dependent on the extent to which the push-on sleeve and the threaded ring are screwed together. Although the sealing rings inside the pipe-connecting element can also be compressed before the pipe ends are fitted into the pipe-connecting element, a considerable force is then required for it to be possible to push the pipe ends past the sealing rings into the pipe-connecting elements. Even then, it is often still necessary to screw the pipe-connecting element further together in order to obtain an adequate seal. In practice, it has also been found that leakage may still occur "along the back". In this context, leakage "along the back" is intended to mean leakage between the spacer ring, the sealing rings and the push-on sleeve or the threaded ring.

GB-A-1 148 885 discloses a sealing ring according to the preamble of claim 1, having an initially square section with an inner circumferential wall, two side flanks and an outer circumferential wall. In both side flanks parabolic cavities are present. On both the inner and outer circumferential wall a pair of axially spaced, stubby, sharp-edged ribs are present, extending in a radially inner respectively outer direction. This sealing ring is particularly suitable for use in reciprocating motions, in which friction between the sealing ring and surface to be sealed has to be minimised. The sharp-edged ribs lower the frictional resistance between the sealing ring and the reciprocating object to be sealed, for example a piston.

A drawback of this know sealing ring is that it is badly usable in a pipe-connecting element. The ribs are not or hardly deformable in an axial direction. If for example a pipe end is pushed in the sealing ring, the sealing ring will be compressed in a radial direction, and the ribs shall not deform in the axial direction. This deformation behaviour is connected with the parabolic cavities in the side flanks on one hand, and on the other hand with the stubby shape of the ribs which are delimited by a shallow continuously encircling indentation.

The object of the invention is to provide a sealing ring and a pipe-connecting element having a sealing ring of this nature which does not exhibit the above drawbacks. The particular object of the invention is to provide a sealing ring and a pipe-connecting element in which the sealing ring is automatically deformed, as a result of a pipe end being pushed into the pipe-connecting element, in such a manner that a good seal is obtained without considerable forces being required during fitting.

This object is achieved by means of a sealing ring according to claim 1. In this case, the elastically deformable sealing ring has a profiled polygonal cross section in which it is possible to distinguish between an inner circumferential wall, two side flanks and an outer circumferential wall. Continuously encircling indentations are located in both side flanks and in the outer circumferential wall. At least two lips project radially inwards from the inner circumferential wall. The lips delimit a continuously encircling cavity. The lips are deformable in an axial direction of the sealing ring. This specific combination of lips and indentations ensures that the sealing ring can be deformed in an advantageous manner, in particular when it is pushed onto a pipe end or when a pipe end is pushed through the sealing ring, the internal diameter of the lips being smaller than the external diameter of the pipe part which is to be pushed in. The deformation of the lips provides for the sealing ring to be deformed in all directions and that a good seal is obtained between the sealing ring and the pipe end which is pushed in.

Preferred embodiments of the sealing ring are defined in claims 2-7.

The invention also relates to a pipe-connecting element for connecting a pipe end to a socket, in which a sealing ring according to the invention is used. A circumferential groove is arranged in the inner circumferential wall of the socket. The sealing ring according to the invention is accommodated in the circumferential groove. The lips of the sealing ring project at least partially out of the circumferential groove in the radial direction. A pipe end with an external diameter which is greater than the internal diameter of the lips can be pushed inwards into the pipe-connecting element. In the process, the lips of the sealing ring are to some extent pushed sideways and stretched. As a result of friction between the lips and the end of the pipe, the lips are to some extent pulled with the pipe in the direction in which it is pushed in. The deformation of the lips causes deformation of the entire sealing ring inside the circumferential groove. The specific combination of the lips on the inner circumferential wall and the continuously encircling indentations in the two side flanks and in the outer circumferential wall ensures a defined, specific deformation. This deformation of the entire sealing ring, which is initiated by the deformation of the lips, has the effect that the wall parts on either side of the continuously encircling indentations in the side flanks bear against the side walls of the groove, while the wall parts on either side of the continuously encircling indentation in the outer circumferential wall of the sealing ring are pressed to a greater extent onto the groove circumferential wall. Together, these measures provide a very effective seal. There is no leakage between the sealing ring and the pipe end, and the abovementioned leakage "along the back" also does not occur, while the force which is required to push in the pipe remains extremely limited. The deformation of the sealing ring in the pipe connecting element advantageously occurs automatically as a result of a pipe end being pushed in. Further deformation of the sealing ring, for example by reducing the size of the circumferential groove, is not required to obtain a good seal. After fitting, the lips rest with a certain force against the outer wall of the pipe end. As a result of the pipe end being pushed in, the lips are deformed in such a manner that they project in the axial direction in the direction of a flow of liquid guided through the pipe ends. Any liquid which reaches the lips presses against the lips and advantageously ensures that the pressure of the lips on the outer wall of the pipe end increases, thus further improving the sealing function. If for some reason the first lip should allow liquid to pass through, for example as a result of damage to the pipe-end face, this liquid is still blocked by the second lip.

Preferred embodiments of the pipe-connecting element are defined in claims 9-12.

The invention will be explained in more detail with reference to the appended drawing, in which:
Fig. 1 shows a cross-sectional view of a preferred embodiment of a sealing ring according to the invention;
Fig. 2 shows a view on an enlarged scale of the detail II in Fig. 1;
Fig. 3 shows a longitudinal section through a pipe-connecting element according to the invention;
Figs. 4a and 4b show the introduction, in steps, of a pipe end into the pipe-connecting element from Fig. 2.

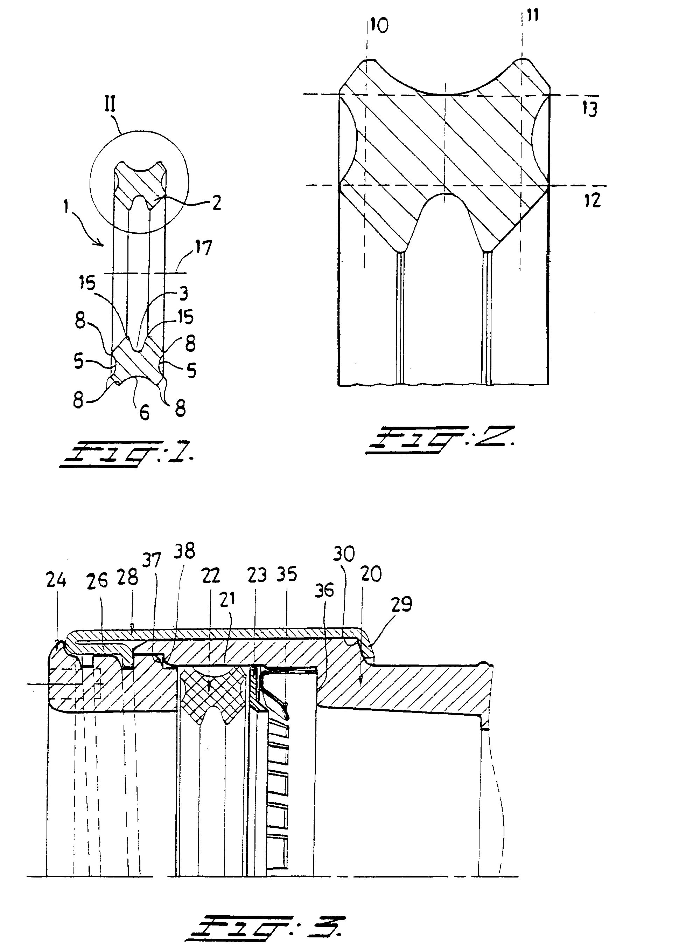

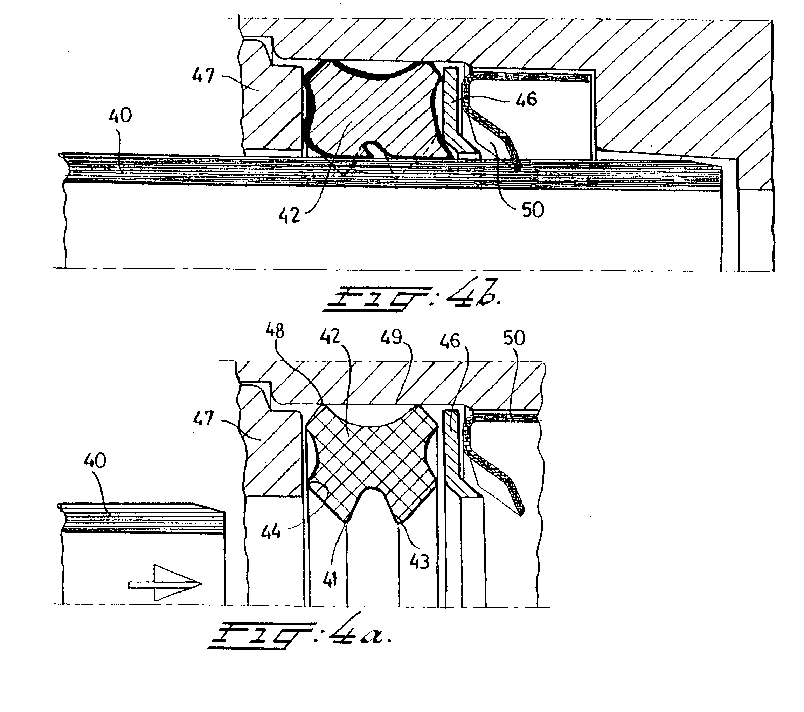

The sealing ring in Fig. 1 is denoted overall by the reference numeral 1. The sealing ring 1 has a profiled cross section with at least two lips 2 which project perpendicularly inwards from the inner circumferential wall. The lips 2 together delimit a cavity 3. The sealing ring 1 furthermore comprises a side flank on either side, each provided with a continuously encircling indentation 5. The outer circumferential wall is also provided with a continuously encircling indentation 6. The sealing ring is made from an elastically deformable material, for example rubber. The hardness of the rubber is between 50 and 80° Shore, and is, in particular, substantially equal to 70° Shore. The lips 2 are deformable in the axial direction of the sealing ring 1. The combination of the lips 2 with the indentations 5, 6 imparts a specific, desired deformation behaviour to the sealing ring 1 during fitting. This behaviour will be discussed in more detail below with reference to an application example for the sealing ring in a pipe-connecting element (Figs. 3 and 4).

The wall parts on either side of each continuously encircling indentation 5, 6 are rounded or bevelled. Consequently, it is possible to recognize a highest point 8 for each wall part. The rounded parts or bevels are such that the highest points 8 are each located at locations where the sealing ring 1 is not reduced by a continuously encircling indentation 5, 6 in the respectively perpendicular side flank or outer circumferential wall. For the sake of clarity, dashed lines 10, 11, 12 and 13 are drawn in Fig. 2, which lines 10-13 each pass through one of the highest points 8 in a direction parallel to the side flank or outer circumferential wall which is perpendicular thereto. It can be seen that the lines 10-13 do not intersect the continuously encircling indentations 5, 6 and the cavity 3 which is delimited by the lips. This is advantageous since it firstly promotes the specific, desired deformation of the sealing ring 1, and secondly improves the strength of this ring.

The two lips 2 comprise vertices 15. The inwardly facing vertices 15 of the lips 2 each lie in planes which are located between planes in which the maximum external diameters of the highest points 8 of the outer circumferential wall of the sealing ring are located. With respect to the highest points 8 on the outer circumferential wall, the vertices 15 lie further towards the centre of the inner circumferential wall. The depth of the cavity 3 is greater than the depth of the continuously encircling indentations, in particular at least 1½ times greater. The lips 2 are bevelled from the vertices 15 towards the adjoining highest points 8. The bevels lie at an angle of substantially 45° with respect to the side flanks. The specific shape, position and dimensions of the lips 2 also promote the specific, desired deformation of the sealing ring 1.

The sealing ring 1 is advantageously mirror-symmetrical with respect to a plane of symmetry lying perpendicular to the axis 17, so that it is impossible to make a mistake when fitting. The continuously encircling indentations 5, 6 are preferably of concave design. This again has advantages for the desired deformation of the sealing ring and reduces the risk of cracking.

Fig. 3 shows a socket 20 with a circumferential groove 21 arranged in the inner circumferential wall. A sealing ring 22 as described above with reference to Fig. 1 is arranged in the circumferential groove 21. On the right-hand side, the sealing ring 22 is delimited by a support ring 23, and on the left-hand side by a retaining ring 24. Part of the retaining ring 24 projects inwards into the circumferential groove 21. That part of the retaining ring 24 which projects outwards is provided with an external screw thread on which a threaded edge 26 of a reinforcement sleeve 28 engages. The reinforcement sleeve 28 extends, on the outside of the socket 20, to beyond that part of the socket which is provided with the circumferential groove 21. Where it projects beyond this part of the socket, a flanged rim part 29 of the reinforcement sleeve 28 engages on a radially extending wall surface 30 of the socket 20. On the right-hand side, the support ring 23 is delimited by a grip ring 35. The grip ring 35 in turn bears against the end wall 36 of the circumferential groove 21.

The diameter of the circumferential groove 21 at the location of the part which is intended to accommodate the sealing ring 22 is substantially equal to the largest diameter of the undeformed sealing ring 22. The width of that part of the circumferential groove 21 which is intended to accommodate the sealing ring 22 is slightly greater than the width of the undeformed sealing ring 22, in particular 0-10% greater. This play for the undeformed sealing ring 22 is achieved by the fact that, in the fitted position, an edge 37 of the retaining ring 24 adjoins a narrowed section 38 in the circumferential groove 21. This additional space which is available in the axial direction for the sealing ring 22 ensures that it can be deformed slightly inside the circumferential groove 21, for example when a pipe end is pushed into the pipe-connecting element.

The action of the sealing element according to the invention in combination with the pipe-connecting element according to the invention will be explained in more detail with reference to Fig. 4. Fig. 4a shows part of the pipe-connecting element from Fig. 3 on an enlarged scale, together with a front part of a pipe end 40 which is still to be pushed inwards. In Fig. 4a, the sealing ring 42 has not yet undergone any deformation. While the pipe end 40 is being pushed inwards, firstly the bevelled front part of the pipe end 40 comes to bear against the front lip 41 of the sealing ring 42. As the pipe end 40 is pushed further inwards, this front lip 41 will stretch and, as a result of frictional forces, be deformed in the axial direction. The deformation of the lip 41 causes deformation of the body of the sealing ring as a whole, with the result that on the one hand the highest points 44 are pressed against the groove wall with an increased force and, on the other hand, the continuously encircling indentation between them is flattened, resulting in twisting of the second lip 43 in the direction of the first lip. As the pipe part is pushed further inwards, the second lip 43 is also stretched and, due to the friction, deformed (back) in the axial direction. The stretching of the lips 41, 43 results in deformation of the entire sealing ring 42. Consequently, the highest points 44 of the side flanks are supported against the side walls of the support ring 46 and the retaining ring 47. The highest points 48 of the outer circumferential wall are pressed further against the wall of the circumferential groove 49. The result is a very good seal, both between the lips 41, 43 and the pipe end 40 and between the highest points 44, 48 and the walls of the support ring, retaining ring and circumferential groove. This specific deformation is diagrammatically depicted in Fig. 4b and is advantageously achieved automatically by the particular shape of the sealing ring without requiring further deformation of the sealing ring 42 after the pipe end 40 has been pushed in.

If the pipe end 40 is pushed further inwards, the front part of this end has to move past the grip ring 50. As it does so, the grip ring 50, which is known per se, clamps securely around the pipe end 40. The design with the grip ring 50 and the support ring 46 has a number of advantages for the seal. For example, the sealing ring 42 is located at a position on the wall of the pipe end 40 where the grip ring 50 has not been in contact with the pipe end 40. Any damage to the surface of the pipe end 40 which may have arisen as a result of cracks caused by the relatively hard grip ring 50 consequently cannot have any adverse effect on the functioning of the seal. Due to the grip ring 50, the connection between the pipe end 40 and the pipe-connecting element is able to withstand a tensile force. If the liquid pressure inside the pipe-connecting element is high, this will result in a tensile force being exerted on the connection. This tensile force is advantageously transmitted via the grip ring 50 to the support ring 46, with the result that the chamber in the sealing ring 42 becomes smaller, the sealing ring 42 is deformed further, and in this way an additional seal is produced between the sealing ring 42 and the pipe end 40, as well as between the sealing ring 42 and the wall of the circumferential groove 49.

The structure having the retaining ring 24 and the reinforcement sleeve 28 advantageously allows simple dismantling (cf. Fig. 3). The retaining ring 24 is easy to unscrew, thus making it possible to successively remove from the socket 20, together with the pipe end, the sealing ring 22, the support ring 23 and the grip ring 35. It is then possible to use a tool to remove the grip ring 35 from the pipe end. This also allows the support ring 23 and the sealing ring 22 to be pushed off the pipe end without causing any damage. Due to the resilient lips, pushing off the sealing ring requires very little force.

The sealing ring, optionally in combination with the pipe-connecting element according to the invention, is particularly suitable for use for joining together plastic pipe systems. The pipe-connecting element with the sealing ring is extremely user friendly, since little force is required during fitting. Another considerable advantage is that in the event of changes being made to the system of pipes, the connections between the pipe ends and the pipe-connecting elements can be detached without damage. In particular, the sealing rings and the pipe-connecting element are suitable for connecting plastic pipes for water conduits to one another indoors.

## Claims

1. Sealing ring (1) made from an elastically deformable material and having a profiled polygonal cross section with an inner circumferential wall, two side flanks and an outer circumferential wall, comprising:
- continuously encircling recesses in both side flanks and in the inner and outer circumferential wall;
- in which the continuously encircling recess in the outer circumferential wall is a continuously encircling indentation (6),
**characterized in that**,
the continuously encircling recesses in both side flanks are continuously encircling indentations (5), and
the continuously encircling recess in the inner circumferential wall is a cavity (3) which is delimited by at least two lips (2) which project radially inwards from the inner circumferential wall,
which lips (2) are deformable in the axial direction of the sealing ring (1), in which the difference between the smallest radial dimension of the two lips and the largest radial dimension of the cavity (3) delimited by the lips (2) is greater than the depth of the continuously encircling indentations (5, 6).

2. Sealing ring according to claim 1, in which the wall parts on either side of each continuously encircling indentation (5, 6) have highest points (8) which lie at a location where the sealing ring (1) is not reduced by a continuously encircling indentation (5, 6) in the side flank or outer circumferential wall which is perpendicular thereto.

3. Sealing ring according to claim 2, in which the two lips (2) comprise vertices (15) which lie closer together than the two highest points (8) on the opposite outer circumferential wall.

4. Sealing ring according to one of the preceding claims, in which the sealing ring (1) is mirror-symmetrical with respect to a plane of symmetry which lies perpendicular to the axial direction.

5. Sealing ring according to one of the preceding claims, in which the continuously encircling indentations (5, 6) are concave.

6. Sealing ring according to one of the preceding claims, in which the wall parts are bevelled or rounded on either side of each continuously encircling indentation (5, 6).

7. Sealing ring according to one of the preceding claims, in which the sealing ring (1) is made from rubber, with a hardness of between 50 and 80° Shore, in particular 70° Shore.

8. Pipe-connecting element, comprising:
- a socket (20) having an inner circumferential wall and an end;
- a circumferential groove (21) arranged in the inner circumferential wall of the socket (20); and
- a sealing ring (22) according to one of claims 1-7 which is accommodated in the circumferential groove (21).

9. Pipe-connecting element according to claim 8, in which the width of that part of the circumferential groove (21) which accommodates the sealing ring (22) is greater than the width of the sealing ring (22), in particular 0-10% greater.

10. Cylindrical pipe end and pipe-connecting element according to claim 8 or 9, in which the smallest diameter of the lips (41, 43) is smaller than the external diameter of the pipe end (40) which is to be fitted into the socket, in particular 10% smaller.

11. Cylindrical pipe end and pipe-connecting element according to one of claims 8-10, in which the largest diameter of the cavity delimited by the lips (41, 43) is greater than the external diameter of the pipe end (40) which is to be fitted into the socket, in particular 10% greater.

12. Pipe-connecting element according to one of claims 8-9, in which the circumferential groove (21) is delimited, on the side of the end of the socket (20), by a retaining ring (24) which is connected to the socket (20), which retaining ring (24) projects outside the socket (20), and in which a reinforcement sleeve (28) is also provided, which sleeve interacts with the projecting part of the retaining ring, and extends, on the outside of the socket (20), to beyond that part of the socket which is provided with the circumferential groove (21), where it engages on the outer circumferential wall of the socket (20), and in which the projecting part of the retaining ring is provided with an external screw thread, and the reinforcement sleeve (28) is provided with a helical edge (26).

## Patentansprüche

1. Dichtungsring (1) aus elastisch verformbarem Material mit einem polygonalen Querschnittsprofil mit einer inneren Umfangswand, zwei Seitenflanken und einer äußeren Umfangswand, aufweisend:
- kontinuierlich umlaufenden Auskehlungen in beiden Seitenflanken und in der inneren und äußeren Umfangswand,
- wobei die kontinuierlich umlaufenden Auskehlung in der äußeren Umfangswand eine kontinuierlich umlaufende Vertiefung (6) ist,
**dadurch gekennzeichnet, daß**
die kontinuierlich umlaufenden Auskehlungen in beiden Seitenflanken kontinuierlich umlaufende Vertiefungen (5) sind und
die kontinuierlich umlaufende Auskehlung in der inneren Umfangswand eine Mulde (3) ist, die von zumindest zwei Lippen (2) begrenzt ist, die von der inneren Umfangswand radial nach innen vorstehen,
welche Lippen (2) in axialer Richtung des Dichtungsrings (1) verformbar sind, wobei der Unterschied zwischen der kleinsten radialen Abmessung der beiden Lippen und der größten radialen Abmessung der von den Lippen (2) begrenzten Mulde (3) größer ist als die Tiefe der kontinuierlich umlaufenden Vertiefungen (5, 6).

2. Dichtungsring nach Anspruch 1, bei dem die Wandteile auf beiden Seiten jeder kontinuierlich umlaufenden Vertiefung (5, 6) höchste Punkte (8) aufweisen, die an einer Stelle liegen, wo die Dichtungsring (1) durch eine kontinuierlich umlaufende Vertiefung (5, 6) in der Seitenflanke oder der äußeren Umfangswand, die zu dieser senkrecht steht, nicht reduziert ist.

3. Dichtungsring nach Anspruch 2, bei dem die beiden Lippen (2) Scheitel (15) aufweisen, die enger beieinanderliegen als die beiden höchsten Punkte (8) an der gegenüberliegenden äußeren Umfangswand.

4. Dichtungsring nach einem der vorhergehenden Ansprüche, bei dem der Dichtungsring (1) spiegelsymmetrisch in Bezug auf eine Symmetrieebene ausgebildet ist, die senkrecht zur Axialrichtung liegt.

5. Dichtungsring nach einem der vorhergehenden Ansprüche, bei dem die kontinuierlich umlaufenden Vertiefungen (5, 6) konkav sind.

6. Dichtungsring nach einem der vorhergehenden Ansprüche, bei dem die Wandteile auf beiden Seiten jeder kontinuierlich umlaufenden Vertiefung (5, 6) abgeschrägt oder abgerundet sind.

7. Dichtungsring nach einem der vorhergehenden Ansprüche, bei dem der Dichtungsring (1) aus Gummi hergestellt ist, mit einer Härte zwischen 50 und 80° Shore, insbesondere 70° Shore.

8. Rohrverbindungselement, aufweisend:
- einer Muffe (20) mit einer inneren Umfangswand und einem Ende,
- einer in der inneren Umfangswand der Muffe (20) angeordneten Umfangsnut (21) und
- einem Dichtungsring (22) nach einem der Ansprüche 1 bis 7, der in der Umfangsnut (21) aufgenommen ist.

9. Rohrverbindungselement nach Anspruch 8, bei dem die Breite desjenigen Teils der Umfangsnut (21), der den Dichtungsring (22) aufnimmt, größer ist als die Breite des Dichtungsrings (22), insbesondere 0-10% größer.

10. Zylindrisches Rohrende und Rohrverbindungselement nach Anspruch 8 oder 9, bei dem der kleinste Durchmesser der Lippen (41, 43) kleiner ist als der Außendurchmesser des Rohrendes (40), das in die Muffe einzusetzen ist, und insbesondere 10% kleiner.

11. Zylindrisches Rohrende und Rohrverbindungselement nach einem der Ansprüche 8 bis 10, bei dem der größte Durchmesser der von den Lippen (41, 43) begrenzten Mulde größer ist als der Außendurchmesser des Rohrendes (40), das in die Muffe einzusetzen ist, und insbesondere 10% größer.

12. Rohrverbindungselement nach einem der Ansprüche 8 bis 9, bei dem die Umfangsnut (21) auf der Seite des Endes der Muffe (20) von einem Haltering (24) begrenzt ist, der mit der Muffe (20) verbunden ist, welcher Haltering (24) außen an der Muffe (20) vorsteht, und wobei ferner eine Verstärkungshülse (28) vorgesehen ist, welche Hülse mit dem vorstehenden Teil des Halterings zusammenwirkt und sich an der Außenseite der Muffe (20) über denjenigen Teil der Muffe hinauserstreckt, der mit der Umfangsnut (21) versehen ist, wo sie mit der äußeren Umfangswand der Muffe (20) in Eingriff steht, und wobei der vorstehende Teil des Halterings mit einem äußeren Schraubgewinde und die Verstärkungshülse (28) mit einem schraubenförmigen Rand (26) verstehen ist.

## Revendications

1. Bague d'étanchéité (1) réalisée à partir d'une matière déformable élastiquement et présentant une section transversale polygonale profilée comportant une paroi circonférentielle intérieure, deux flancs latéraux et une paroi circonférentielle extérieure, comprenant :
- des creux d'encerclement continus formés dans les deux flancs latéraux et dans les parois circonférentielles intérieure et extérieure;
- le creux d'encerclement continu formé dans la paroi circonférentielle extérieure est une échancrure d'encerclement continue (6),
**caractérisée en ce que**
les creux d'encerclement continus formés dans les deux flancs latéraux sont des échancrures d'encerclement continues (5), et
le creux d'encerclement continu formé dans la paroi circonférentielle intérieure est une cavité (3) délimitée par au moins deux lèvres (2) qui font saillie radialement vers l'intérieur sur la paroi circonférentielle intérieure,
les lèvres (2) étant déformables dans la direction axiale de la bague d'étanchéité (1), et la différence entre la plus petite dimension radiale des deux lèvres et la plus grande dimension radiale de la cavité (3) délimitée par les lèvres (2) étant supérieure à la profondeur des échancrures d'encerclement continues (5, 6).

2. Bague d'étanchéité selon la revendication 1, dans laquelle les parties de paroi situées de part et d'autre de chaque échancrure d'encerclement continue (5, 6) comportent des points culminants (8) qui sont situés à un endroit où la bague d'étanchéité (1) n'est pas réduite par une échancrure d'encerclement continue (5, 6) formée dans le flanc latéral ou la paroi circonférentielle extérieure perpendiculaire à celui-ci.

3. Bague d'étanchéité selon la revendication 2, dans laquelle les deux lèvres (2) comportent des sommets (15) qui s'étendent plus près l'un de l'autre que les deux points culminants (8) situés sur la paroi circonférentielle extérieure opposée.

4. Bague d'étanchéité selon l'une quelconque des revendications précédentes, dans laquelle la bague d'étanchéité (1) est énantiomorphe par rapport à un plan de symétrie qui s'étend perpendiculairement à la direction axiale.

5. Bague d'étanchéité selon l'une quelconque des revendications précédentes, dans laquelle les échancrures d'encerclement continues (5, 6) sont concaves.

6. Bague d'étanchéité selon l'une quelconque des revendications précédentes, dans laquelle les parties de paroi sont biseautées ou arrondies de part et d'autre de chaque échancrure d'encerclement continue (5, 6).

7. Bague d'étanchéité selon l'une quelconque des revendications précédentes, dans laquelle la bague d'étanchéité (1) est réalisée à partir d'un caoutchouc ayant une dureté entre 50 et 80° Shore, en particulier une dureté de 70° Shore.

8. Elément de raccordement de tuyauterie comprenant:
un raccord femelle (20) comportant une paroi circonférentielle intérieure et une extrémité;
une gorge circonférentielle (21) disposée dans la paroi circonférentielle intérieure du raccord femelle (20); et
une bague d'étanchéité (22) selon l'une quelconque des revendications 1 à 7, qui est reçue dans la gorge circonférentielle (21).

9. Elément de raccordement de tuyauterie selon la revendication 8, dans lequel la largeur de la partie de la gorge circonférentielle (21), qui reçoit la bague d'étanchéité (22) est supérieure à la largeur de la bague d'étanchéité (22), en particulier supérieure de 0 à 10%.

10. Extrémité de tuyau cylindrique et élément de raccordement de tuyauterie selon la revendication 8 ou 9, dans lesquels le plus petit diamètre des lèvres (41, 43) est inférieur au diamètre extérieur de l'extrémité de tuyau (40) qui doit être insérée dans le raccord femelle, en particulier inférieur de 10%.

11. Extrémité de tuyau cylindrique et élément de raccordement de tuyauterie selon l'une quelconque des revendications 8 à 10, dans lesquels le plus grand diamètre de la cavité délimitée par les lèvres (41, 43) est supérieur au diamètre extérieur de l'extrémité de tuyau (40) qui doit être insérée dans le raccord femelle, en particulier supérieur de 10%.

12. Elément de raccordement de tuyauterie selon l'une quelconque des revendications 8 et 9, dans lequel la gorge circonférentielle (21) est délimitée, du côté de l'extrémité du raccord femelle (20), par une bague de retenue (24) reliée au raccord femelle (20), bague de retenue (24) qui fait saillie à l'extérieur du raccord femelle (20), dans lequel est également prévu un manchon de renforcement (28) qui coopère avec la partie saillante de la bague de retenue, et s'étend, à l'extérieur du raccord femelle (20), jusqu'à un point situé au-delà de la partie du raccord femelle qui comporte la gorge circonférentielle (21), où il vient en contact avec la paroi circonférentielle extérieure de l'organe femelle (20), et dans lequel la partie saillante de la bague de retenue est pourvue d'un filetage extérieur, tandis que le manchon de renforcement (28) est pourvu d'une bord hélicoïdal (26).
